# EUROPEAN PATENT SPECIFICATION

(11) **EP 1 640 209 B1**
(45) Date of publication and mention of the grant of the patent: **17.10.2007**
(21) Application number: 05076975.1
(22) Date of filing: 29.08.2005
(51) Int. Cl.: B60P 1/52, B60P 1/02, B62D 61/12

(54) **Load lift mechanism for a vehicle**
Hubeinrichtung einer Lastaufnahmevorrichtung für ein Fahrzeug
Mécanisme élévateur pour dispositif de chargement d'un véhicule

(30) Priority: 23.09.2004 BE 200400467
(43) Date of publication of application: 29.03.2006
(73) Proprietor: Renders S.A., 2453 Luxembourg (LU)
(72) Inventor: Renders, Franciscus Augustinus, 2382 Ravels (Poppel) (BE)
(74) Representative: Donné, Eddy

(56) References cited:
- GB-A- 2 165 500
- NL-A- 8 602 026
- US-A- 4 093 272

## Description

The present invention concerns a vehicle part for freight traffic, more particularly a towing vehicle part or a semi-trailer of the type which has a loading floor for a load in the shape of a container or the like.

The present invention concerns a vehicle part which is equipped with lifting means which make it possible to lift the load on the loading floor in a simple manner so as to apply lifting belts or the like.

To this end, the present invention concerns a vehicle part for freight traffic which consists of a chassis which is provided with one or several shafts with wheels, which shafts are each provided on at least one supporting arm which is hinge-mounted to the chassis with one far end and which works in conjunction with an adjustable suspension of the chassis with its other far end, as disclosed in document GB 2 165 500, which chassis is a loading floor and is provided with lifting means which mainly consist of one or several rods which are provided in vertical passages in the loading floor in a movable manner and of a lever, with two arms, which are hinge-mounted to the chassis, whereby one arm can work in conjunction with the above-mentioned supporting arm, whereas the other arm can work in conjunction with one or several of the above-mentioned rods.

According to a preferred embodiment of a vehicle part according to the invention, freely rotating rollers are provided at the free end of one or several rods which can be raised above the level of the loading floor.

An advantage of this preferred embodiment is that a load which rests on the above-mentioned lifting means can be moved relatively easily on the loading floor of the vehicle part concerned, without any additional auxiliary means being required.

An example of a similar assembly is disclosed in the document NL 8602026.

In order to better explain the characteristics of the invention, the following embodiment of a vehicle part for freight traffic according to the invention is given as an example only without being limitative in any way, with reference to the accompanying figures, in which:
figure 1 represents a vehicle part according to the invention;
figure 2 represents the part indicated by F2 in figure 1 to a larger scale;
figure 3 represents a view which corresponds to the view in figure 1, but in another position.

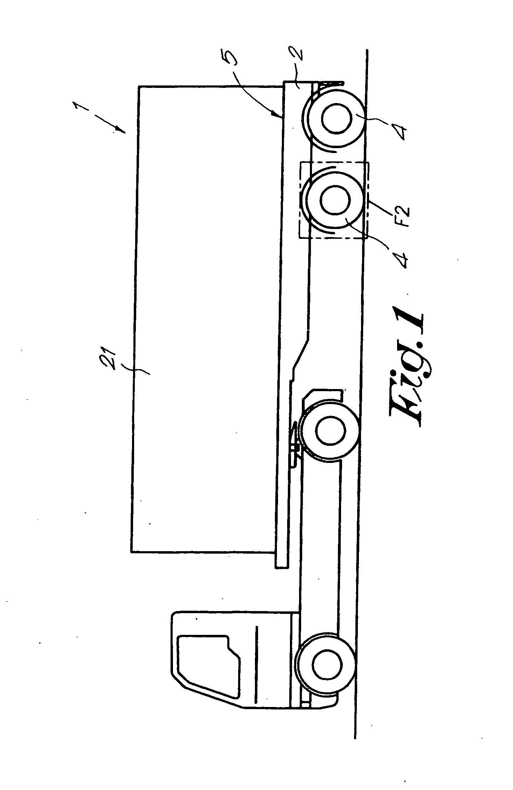

Figure 1 represents a vehicle part 1, in this case a semi-trailer, which mainly consists of a chassis 2 which is provided with a shaft 3 with wheels 4 and which has a loading floor 5 on its top side.

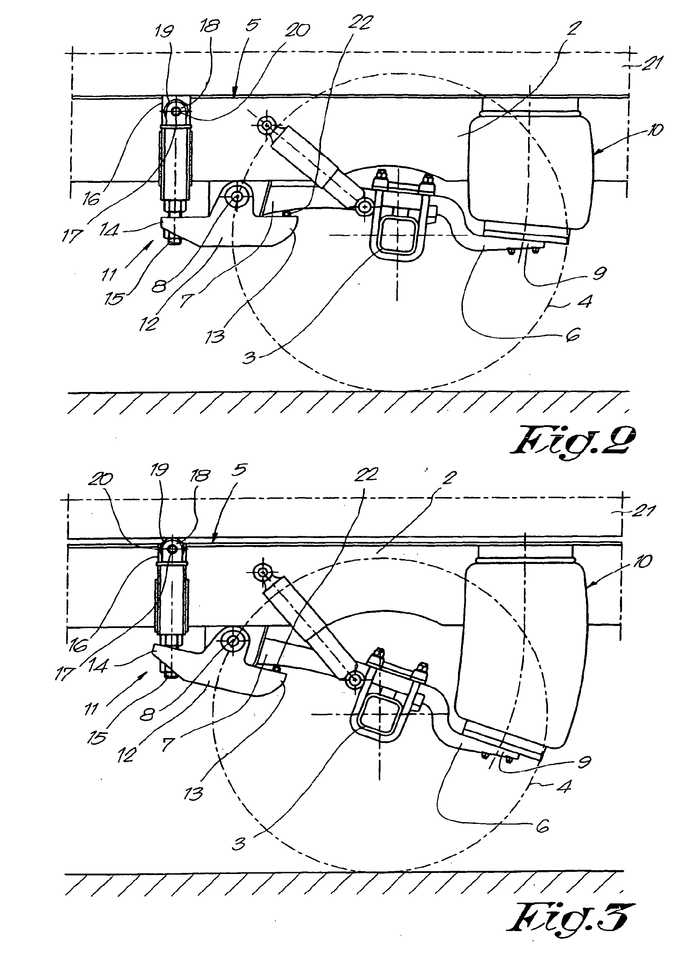

As is represented in the figures 2 and 3, the above-mentioned shaft 3 is fixed to a supporting arm 6 which is hinge-mounted to the chassis 2 at one far end 7, by means of a hinge pen 8, and which is suspended to a suspension 10 with its other far end 9, which suspension in this case consists of bellows which are fixed to the chassis 2.

According to the invention, the above-mentioned vehicle part 1 comprises a lifting system 11 which consists of a lever 12 which, in this case, is hinge-mounted to the chassis 2 by means of the above-mentioned hinge pen 8.

The above-mentioned lever 12 contains two arms 13 and 14, whereby the first arm 13 meshes under the above-mentioned supporting arm 6 and whereby the second arm 14 is in this case provided with a bore in which is provided a ball joint, onto which is fixed a far end of a rod 15.

This rod 15 is provided in a movable manner in a passage 16 which is provided in the chassis 2, whereby it can be moved between an active position, whereby this rod 15 protrudes with its free end 17 above the level of the loading floor 5, and a storage position in which the free end 17 of the rod 15 is situated under the level of the loading floor 5.

The above-mentioned rod 15 is in this case provided with two parallel ears 18 at its free end 16 in which is provided a bore, in between which has been provided a roller 19 whose shaft 20 is bearing-mounted in the above-mentioned bores.

The working of the auxiliary means 11 which are provided in the vehicle part 1 according to the invention is simple and as follows.

When the vehicle part 1 is situated in a transport position, whereby a load 21 such as a container or the like is provided on the loading floor 5, the suspension 10 is set such that the above-mentioned supporting arm 6 is situated in a horizontal, or practically horizontal position.

In that case, also the lever 12 is situated in a practically horizontal position, whereby the rod 15 is in a storage position and the above-mentioned load 21 rests on the loading floor 2 of the vehicle part 1.

In order to raise the load 21 with the help of the lifting means 11, one only has to activate the adjustable suspension 10 such that, for example by pressing air in the bellows, the far end of the supporting arm 6 which is suspended to the suspension 10 is pushed down in relation to the chassis 2 and thus hinges around the above-mentioned hinge pen 8.

As a result of this hinging down of the supporting arm 6 in relation to the chassis 2, the first arm 13 of the lever 12 is pushed down, as a result of which the other arm 14 is moved up and hereby brings the rod 15 in an active position, whereby the load 21 rests on the roller 19.

When the air in the bellows is then discharged again, the load will drop back on the loading floor 5 as a result of the gravitation.

It is clear that, in order to be able to entirely lift a load 21 from the chassis 2, several rollers 19 must be provided.

It should be noted that it is also possible, of course, to provide a cross beam at the free end 17 of the rod 15, which is not represented in the figures and onto which a series of rollers 18 are fixed in a rotating manner, which can be pushed up simultaneously. Also when several of the above-mentioned rods 15 are mutually connected, said effect can be obtained.

Of course, it is possible to provide different lifting means 11 per supporting arm 6 or to make the lever 12 work in conjunction with another part of the supporting arm 6.

Moreover, it is also possible to hinge-mount the lever 12 to the chassis 2 by means of another hinge pen than the one with which the supporting arm 6 is fixed to the chassis 2, which additional hinge pen is situated either or not in the extension of the above-mentioned hinge pen 8 on the chassis 2.

Further, it should be noted that on the contact surface of the arm 14 with the supporting arm 6 is provided a guide 22 which reduces the frictional forces between the supporting arm 6 and the lever 12.

It is also possible to equip the lever 12 with a locking system which makes it possible to lock the lever 12 in a horizontal, or practically horizontal position, such that it is possible to prevent the rods 15 from being moved up while the vehicle part is riding.

Such a locking system could for example consist of a safety pin which is not represented in the figures and which can be provided in a bore through the lever 12 and the chassis 2, when the lever 12 is situated in a position whereby the rods 15 are in the storage position.

The present invention is by no means limited to the embodiment described above and represented in the figures; on the contrary, such a vehicle part according to the invention can be made according to several variants while still remaining within the scope of the invention.

## Claims

1. Vehicle part for freight traffic which consists of a chassis (2) which is provided with one or several shafts (3) with wheels (4), which shafts (3) are each provided on at least one supporting arm (6) which is hinge-mounted to the chassis (2) with one far end (7) and which works in conjunction with an adjustable suspension (10) of the chassis (2), which has a loading floor (5), with its other far end (9), **characterised in that** the chassis (2) is provided with lifting means (11) which mainly consist of one or several rods (15) which are provided in a movable manner in vertical passages (16) in the chassis (2) and of a lever (12), with two arms (13, 14), which are hinge-mounted to the chassis (2), whereby one arm (13) can work in conjunction with the above-mentioned supporting arm (6), whereas the other arm (14) can work in conjunction with one or several of the above-mentioned rods (15).

2. Vehicle part according to claim 1, **characterised in that** the far end (17) of each or several rods (15), which can be raised above the level of the loading floor (5) , is provided with at least one freely rotating roller (19).

3. Vehicle part according to claim 1, **characterised in that** the lever (12) and the supporting arm (6) are hinge-mounted to the chassis (2) on one and the same hinge pin.

4. Vehicle part according to claim 1, **characterised in that** the suspension (10) is a bellows.

5. Vehicle part according to claim 1, **characterised in that** on the above-mentioned far end (17) of one or several of the rods (15) are provided several rollers (18).

6. Vehicle part according to claim 1, **characterised in that** one or several rods (15) are mutually connected, whereby at least one of these rods (15) works in conjunction with the above-mentioned arm (14) of the lever (12) and whereby these rods (15) are each provided with a roller (18) at their far ends (17).

7. Vehicle part according to claim 1, **characterised in that** on the contact surface of the above-mentioned arm (13) of the lever (12) with the supporting arm (6) is provided a guide (22).

8. Vehicle part according to claim 1, **characterised in that** the lifting means (11) are provided with a locking system for locking the lever (12) in a storage position of one or several rods (15).

## Patentansprüche

1. Fahrzeugteil für Frachttransport, das aus einem Chassis (2) besteht, das mit einer oder mehreren Achsen (3) mit Rädern (4) versehen ist, welche Achsen (3) jede an mindestens einem Stützarm (6) angebracht sind, der mit einem Ende (7) scharnierbeweglich an dem Chassis (2) montiert ist und der mit seinem anderen Ende (9) mit einer verstellbaren Aufhängung (10) des Chassis (2) zusammenwirkt, das einen Ladeboden (5) aufweist, **dadurch gekennzeichnet, dass** das Chassis (2) mit Hubmitteln (11) versehen ist, die im wesentlichen aus einer oder mehreren Stangen (15), die bewegbar in vertikalen Durchgängen (16) in dem Chassis (2) angebracht sind, und aus einem Hebel (12) mit zwei Armen (13, 14), die scharnierbeweglich an dem Chassis (2) befestigt sind, bestehen, wobei ein Arm (13) mit dem vorgenannten Stützarm (6) zusammenwirken kann, während der andere Arm (14) mit einer oder mehreren der vorgenannten Stangen (15) zusammenwirken kann.

2. Fahrzeugteil nach Anspruch 1, **dadurch gekennzeichnet, dass** das Ende (17) jeder von einer oder mehreren Stangen (15), das über das Niveau des Ladebodens (5) angehoben werden kann, mit mindestens einer frei verdrehbaren Rolle (19) versehen ist.

3. Fahrzeugteil nach Anspruch 1, **dadurch gekennzeichnet, dass** der Hebel (12) und der Stützarm (6) scharnierbeweglich an ein und demselben Scharnierzapfen an dem Chassis (2) befestigt sind.

4. Fahrzeugteil nach Anspruch 1, **dadurch gekennzeichnet, dass** die Aufhängung (10) ein Luftbalg ist.

5. Fahrzeugteil nach Anspruch 1, **dadurch gekennzeichnet, dass** an dem obengenannten Ende (17) einer oder mehreren der Stangen (15) mehrere Rollen (18) vorgesehen sind.

6. Fahrzeugteil nach Anspruch 1, **dadurch gekennzeichnet, dass** eine oder mehrere Stangen (15) miteinander verbunden sind, wobei mindestens eine dieser Stangen (15) mit dem vorgenannten Arm (14) des Hebels (12) zusammenwirkt und wobei diese Stangen (15) an ihren Enden (17) jede mit einer Rolle (18) versehen sind.

7. Fahrzeugteil nach Anspruch 1, **dadurch gekennzeichnet, dass** an der Kontaktfläche des vorgenannten Arms (13) des Hebels (12) mit dem Stützarm (6) eine Führung (22) vorgesehen ist.

8. Fahrzeugteil nach Anspruch 1, **dadurch gekennzeichnet, dass** die Hubmittel (11) mit einem Blockiersystem zum Blockieren des Hebels (12) in einer Aufbewahrungsposition von einer oder mehreren Stangen (15) versehen sind.

## Revendications

1. Partie de véhicule pour le trafic marchandises, qui est constituée par un châssis (2) qui est muni d'un ou de plusieurs arbres (3) comportant des roues (4), lesdits arbres (3) étant chacun prévu sur un bras de support (6) qui est monté en articulation sur le châssis (2) avec une de ses extrémités éloignées (7) et qui travaille conjointement avec une suspension réglable (10) du châssis (2), qui possède un plancher de chargement (5), avec son autre extrémité éloignée (9), **caractérisée en ce que** le châssis (2) est muni de moyens de levage (11) qui sont constitués principalement par une ou plusieurs tiges (15) qui sont prévues en mobilité dans des passages verticaux (16) pratiqués dans le châssis (2) et par un levier (12) comportant deux bras (13, 14) qui sont montés en articulation sur le châssis (2), un bras (13) étant à même de travailler de manière conjointe avec le bras de support susmentionné (6), tandis que l'autre bras (14) est à même de travailler de manière conjointe avec une ou plusieurs des tiges (15) mentionnées ci-dessus.

2. Partie de véhicule selon la revendication 1, **caractérisée en ce que** l'extrémité éloignée (17) de chaque tige (15) ou de plusieurs de ces dernières, qui est ou sont à même de se soulever au-dessus du niveau du plancher de chargement (5), est munie d'au moins un galet monté en rotation libre (19).

3. Partie de véhicule selon la revendication 1, **caractérisée en ce que** le levier (12) et le bras de support (6) sont montés en articulation sur le châssis (2) via un seul et même axe.

4. Partie de véhicule selon la revendication 1, **caractérisée en ce que** la suspension (10) est un soufflet.

5. Partie de véhicule selon la revendication 1, **caractérisée en ce que**, sur l'extrémité éloignée susmentionnée (17) d'une ou de plusieurs tiges (15), on prévoit plusieurs galets (18).

6. Partie de véhicule selon la revendication 1, **caractérisée en ce qu'**une ou plusieurs tiges (15) sont reliées les unes aux autres, au moins une de ces tiges (15) travaillant de manière conjointe avec le bras susmentionné (14) du levier (12) et les tiges en question (15) étant chacune munie d'un galet (18) à leurs extrémités éloignées (17).

7. Partie de véhicule selon la revendication 1, **caractérisée en ce que**, sur la surface de contact du bras susmentionné (13) du levier (12) avec le bras de support (6), on prévoit un guide (22).

8. Partie de véhicule selon la revendication 1, **caractérisée en ce que** les moyens de levage (11) sont munis d'un système de verrouillage pour verrouiller le levier (12) dans une position d'entreposage d'une ou de plusieurs tiges (15).
